# EUROPÄISCHE PATENTSCHRIFT

(11) **EP 1 560 675 B1**
(45) Veröffentlichungstag und Bekanntmachung des Hinweises auf die Patenterteilung: **29.06.2011**
(21) Anmeldenummer: 03757519.8
(22) Anmeldetag: 27.10.2003
(51) Int. Cl.: B23K 11/24, B23K 11/26, B23K 11/11, B23K 11/00

(54) **NETZSTROMREGELUNG FÜR EINE VIELPUNKT-WIDERSTANDSSCHWEISSMASCHINE MIT EINEM AUFLADBAREN ENERGIESPEICHER**
MAINS CURRENT REGULATION FOR A RESISTANCE MULTISPOT WELDING MACHINE COMPRISING A RECHARGEABLE ENERGY STORE
REGULATION DE COURANT DE SECTEUR POUR MACHINE A SOUDER PAR RESISTANCE MULTIPOINT A ACCUMULATEUR D'ENERGIE RECHARGEABLE

(30) Priorität: 12.11.2002 AT 17032002
(43) Veröffentlichungstag der Anmeldung: 10.08.2005
(73) Patentinhaber: EVG Entwicklungs- u. Verwertungs- Gesellschaft m.b.H., A-8074 Raaba (AT)
(72) Erfinder: RITTER, Klaus, A-8042 Graz (AT)
(74) Vertreter: Holzer, Walter
(86) Internationale Anmeldenummer: PCT/AT2003/000321
(87) Internationale Veröffentlichungsnummer: WO 2004/043641

(56) Entgegenhaltungen:
- EP-A- 0 496 339
- EP-A- 0 560 711
- WO-A-98/21001
- FR-A- 2 024 685
- US-A- 2 464 935
- US-A- 2 530 705
- PATENT ABSTRACTS OF JAPAN Bd. 0060, Nr. 33 (M-114), 27. Februar 1982 (1982-02-27) & JP 56 148480 A (NIPPON ABIONIKUSU KK), 17. November 1981 (1981-11-17)

## Beschreibung

Die Erfindung betrifft ein Verfahren und eine Anordnung zum Erzeugen eines periodisch wechselnden Schweißstromes hoher Leistungsdichte mit beliebiger Kurvenform für eine mit einphasigem Wechselstrom- oder Gleichstrom taktweise betriebene Widerstandsschweißmaschine, wobei der Schweißstrom mit Hilfe einer steuerbaren, pulsbreitenmodulierten Wechselrichterschaltung aus einer dreiphasigen Netzspannungsquelle erzeugt wird.

Bei den bisher im Einsatz befindlichen Schweißstromsteuerungen für Widerstandsschweißmaschinen werden zum Erreichen einer hohen Leistungsdichte vorzugsweise Thyristoren in Antiparallelschaltung als Wechselstromsteller verwendet. Dabei wird der benötigte Schweißstrom direkt aus dem Drehstromnetz bezogen. Dies bewirkt vor allem beim Schweißen von Gitterrosten oder Gittermatten mit Hilfe von Vielpunkt-Widerstandsschweißmaschinen eine hohe, in den meisten Fällen unsymmetrische Strombelastung der Netzstromquelle durch den Schweißstrom, während in den Schweißpausen das Stromnetz nur gering durch die Nebenaggregate der Widerstandsschweißmaschine belastet wird. Diese periodisch auftretende Netzbelastung führt zu erheblichen Schwankungen der Netzspannung, wodurch Probleme beim Betrieb anderer Maschinen und Anlagen entstehen können. Ausserdem wird beim Betrieb von Vielpunkt-Widerstandsschweißmaschine das Energieversorgungsnetz mit einem hohen Blindstromanteil belastet. Dies erfordert den Einsatz teurer Blindstromkompensationsanlagen.

Aus der WO - 98/21001 ist ein Verfahren zur Erzeugung eines Schweißstroms hoher Leistungsdichte für Vielpunkt-Widerstandsschweißmaschinen bekannt, wobei aus dem Drehstromnetz mittels einer Gleichrichter-Brückenschaltung eine Gleichspannung gebildet wird, die einen Wechselrichter versorgt. Der Ausgang des Wechselrichters speist einen oder mehrere Schweißtransformatoren mit Wechselstrom einstellbarer Frequenz mit beliebiger, vorzugsweise sinusförmiger Kurvenform. Eine gleichmäßige Stromaufteilung auf alle Netzphasen ist hierbei erst ab einer Schweißstrom-Frequenz gegeben, die das Dreifache der Netzfrequenz beträgt. Der Netzstrom ist allerdings nicht sinusförmig, und es ist ein geringer Blindstromanteil vorhanden. Auch bei dieser Anordnung, genauso wie bei der Schweißstromsteuerung mit Thyristoren, fließt der Netzstrom nur dann, wenn der Wechselrichter einen Schweißstrom liefert. Es tritt also auch bei dieser Anordnung das Problem der pulsierenden Netzbelastung auf.

Aufgabe der Erfindung ist es, die geschilderten Nachteile der bekannten Verfahren und Anordnungen zu vermeiden und einen Betrieb der Widerstandsschweißmaschine mit einer gleichmäßigen Belastung der Netzspannungsquelle zu gewährleisten. Dies wird bei einem Verfahren der einleitend angegebenen Art erfindungsgemäß dadurch erreicht, dass der Schweißstrom zum überwiegenden Teil aus einem zwischen der Netzspannungsquelle dem Verbraucher angeordneten, aufladbaren Energiespeicher und nur zum geringen Teil aus der Netzspannungsquelle entnommen wird, dass der Energiespeicher während der Schweißpausen aus der Netzspannungsquelle mit einem konstanten Netzstrom auf einen wählbaren, maximalen Spannungswert aufgeladen wird, der größer als der Maximalwert der Netzspannung ist, dass der Netzstrom auch beim Schweißen unabhängig von der Größe und vom Verlauf des Schweißstromes auf einem konstanten Wert eingeregelt wird, wobei der Netzstrom eine sinusförmige Kurvenform erhält und phasengleich mit der Netzspannung ist, und dass der Schweißstrom mit Hilfe einer Stromregelung für die Wechselrichterschaltung auf einem vorgewählten Wert eingeregelt wird.

Gegenstand der Erfindung ist ferner eine Anordnung zum Durchführen des Verfahrens mit zumindest einem Zwischenkreiskondensator, einem ansteuerbaren Wechselrichter, einem Schweißtransformator, einem Steuerungsrechner, einem Eingaberechner und einer Maschinensteuerung, dadurch gekennzeichnet, dass zum Aufladen der Zwischenkreiskondensatoren je Netzphase eine Netzdrossel sowie eine mit Hilfe eines von dem Eingaberechner und der Maschinensteuerung ansteuerbaren Steuerungsrechners ansteuerbare Eingangsbrücke vorgesehen ist, die je Netzphase mehrere paarweise geschaltete Leistungstransistoren samt parallel geschalteter Dioden, einen Treiber sowie zumindest einen Dämpfungskondensator aufweist, dass der primäre Schweißstrom mit einer Strommesseinrichtung meßbar ist, deren Messwerte zumindest an den Steuerungsrechner der Eingangsbrücke und an einen Steuerungsrechner für den Wechselrichter übermittelt werden, dass der Netzstrom mit einer Strommesseinrichtung und die Zwischenkreisspannung mit einer Spannungsmesseinrichtung meßbar ist, wobei die Messwerte zumindest an den Eingangsrechner der Eingangsbrücke übermittelt werden, dass der Steuerungsrechner der Eingangsbrücke aufgrund der Messwerte entsprechende Steuersignale an die Treiber der Eingangsbrücke sendet, wodurch die Leistungstransistoren der Eingangsbrücke einen vom Wechselrichter für die Bereitstellung des Schweißstromes benötigten Zwischenkreisstrom in einem pulsbreitenmoduliertem Zeitablauf schalten und der Netzstrom auch während des Schweißtaktes unabhängig von der Größe und vom Verlauf des Schweißstromes auf einem konstanten Wert eingeregelt wird, und dass der Steuerungsrechner des Wechselrichters eine Schaltung zum Konstanthalten des primären Schweißstromes aufweist.

Durch die Verwendung der erfindungsgemäßen Schweißstromsteuerung reduziert sich die Anschlussleistung der Widerstandsschweißmaschine erheblich. Dies ermöglicht den Betrieb der Widerstandsschweißmaschine mit Hilfe eines Stromnetzes, das für geringere Leistung ausgelegt werden kann. Dadurch ergeben sich Kosteneinsparungen bei den Netztransformatoren, den Schaltgeräten und der Verkabelung. Außerdem kann wegen der gleichmäßigen Strombelastung die Energieversorgung einer Widerstandsschweißmaschine durch ein Dieselaggregat wesentlich problemloser und kostengünstiger erfolgen.

Die Erfindung betrifft auch eine Vielpunkt-Widerstandsschweißmaschine zum Herstellen von aus einander senkrecht kreuzenden Längs- und Querelementen bestehenden Gitterrosten oder Gittermatten mit einer Anordnung, dadurch gekennzeichnet, dass an den aus einer Eingangsbrücke mit zugehörigem Steuerungsrechner und zumindest einen Zwischenkreiskondensator bestehenden Zwischenkreis zumindest ein aus einem ansteuerbaren Wechselrichter und einem Schweißtransformator bestehender Schweißstromkreis anschließbar ist.

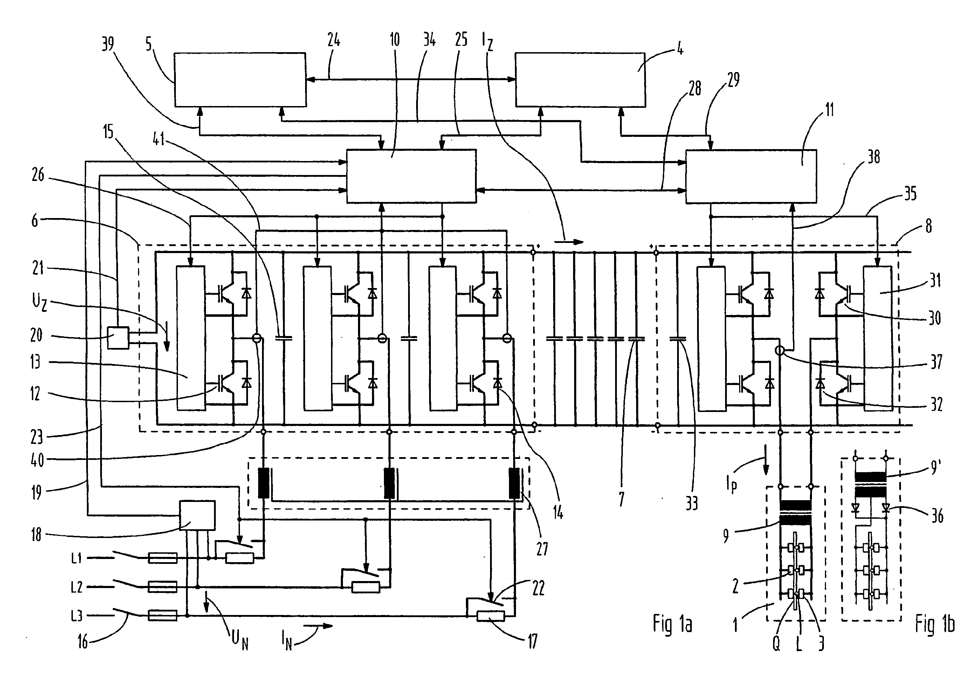

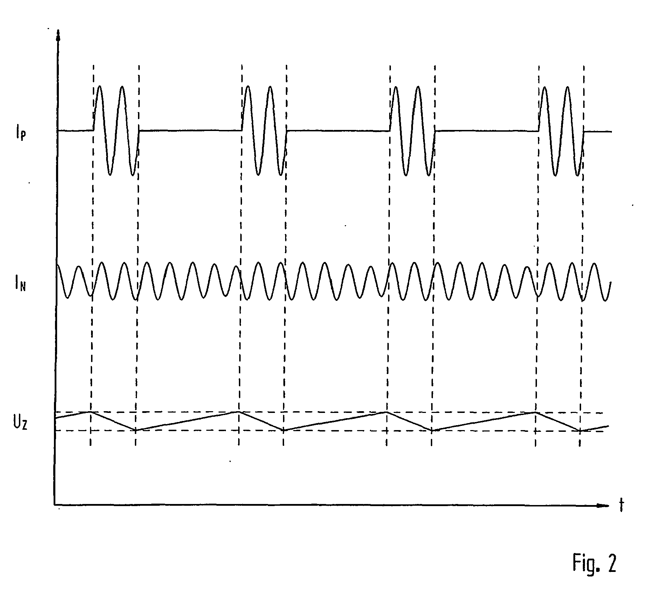

Weitere Merkmale und Vorteile der Erfindung werden nachfolgend an einem Ausführungsbeispiel unter Bezugnahme auf die Zeichnungen näher erläutert. Es zeigen: Fig. 1a ein schematisches Schaltbild einer erfindungsgemäßen Schweißstromsteuerung für eine mit Wechselstrom betriebene Vielpunkt-Widerstandsschweißmaschine, Fig. 1b das Schaltbild der erfindungsgemäßen Schweißstromsteuerung gemäß Fig. 1a für eine mit Gleichstrom betriebene Vielpunkt-Widerstandsschweißmaschine und Fig. 2 den zeitlichen Verlauf des primären Schweißstroms, des Netzstroms und der Zwischenkreisspannung.

Die in Fig. 1 dargestellte erfindungsgemäße Anordnung dient zur Erzeugung eines einphasigen, pulsförmigen Schweißstroms großer Leistungsdichte bei gleichzeitigem, im Wesentlichen konstant bleibendem sinusförmigen Netzstrom. Ein derartiger Schweißstrom wird bei einer Vielpunkt-Widerstandsschweißmaschine 1 zum Herstellen von aus Längselementen L und senkrecht zu diesen angeordneten Querelementen Q bestehenden Gitterrosten oder Gittermatten benötigt. In der Vielpunkt-Widerstandsschweißmaschine 1 werden die Längselemente L und die Querstäbe Q an ihren Kreuzungspunkten mit Hilfe von in Linie angeordneten, mehreren oberen Schweißelektroden 2 und entsprechenden unteren Schweißelektroden 3 miteinander verschweißt. Die jeweils gegenüberliegenden oberen und unteren Schweißelektroden 2 bzw. 3 bilden jeweils ein Schweißelektrodenpaar. Die Herstellung des Gitterrostes oder der Gittermatte erfolgt taktweise, wobei der Schweißstrom in den entsprechenden Taktzeiten mit voller Leistung von der Anordnung zur Verfügung gestellt werden muss.

Die in Fig. 1 dargestellte Anordnung weist im Wesentlichen einen Eingaberechner 4, eine Maschinensteuerung 5, einen dreiphasigen Netzanschluss L1, L2, L3, eine Eingangsbrücke 6, mehrere Zwischenkreiskondensatoren 7 als Speicher für die zum Schweißen notwendige Energie und einen Wechselrichter 8 zur Versorgung zumindest eines Schweißtransformators 9 bzw. 9', einen Steuerungsrechner 10 für die Eingangsbrücke 6 und einen Steuerungsrechner 11 für den Wechselrichter 8 auf.

Die Eingangsbrücke 6 weist für jede Phase des Netzanschlusses L1, L2, L3 ein Paar von Leistungstransistoren, vorzugsweise IGBTs (Insolated Gate Bipolar Transistor) 12 auf, die paarweise von je einem Treiber 13 angesteuert werden, sowie je eine parallel zu den IGBTs 12 angeordnete Diode 14 und mehrere Zwischenkreisdämpfungskondensatoren 15 auf. Anstelle von IGBTs können im Rahmen der Erfindung auch andere geeignete Leistungshalbleiter, wie z.B. GTO-Thyristoren oder IGCTs eingesetzt werden; bei niedriger Spannung und kleiner Leistung sind auch MOSFET-Transistoren einsetzbar. Nach dem Einschalten der Vielpunkt-Widerstandsschweißmaschine 1 mit Hilfe eines Hauptschalters 16 werden die Zwischenkreiskondensatoren 7 und die Zwischenkreisdämpfungskondensatoren 15 der Eingangsbrücke 6 über Ladewiderstände 17 und die Dioden 14 der Eingangsbrücke 6 zunächst auf den Maximalwert der Netzspannung Un aufgeladen. Die Aufgabe der Ladewiderstände 17 ist es, den Ladestrom für die Zwischenkreiskondensatoren 7 derart zu begrenzen, dass die Dioden 14 beim Ladevorgang nicht überlastet werden. Mittels einer Netzspannungs-Messeinrichtung 18 wird die Größe der Netzspannung Un erfasst und die dabei ermittelten Messwerte über eine Datenleitung 19 dem Steuerungsrechner 10 zugeführt. Eine Spannungsmesseinrichtung 20 erfasst die Zwischenkreisspannung Uz, deren gemessener Wert wird über eine Datenleitung 21 ebenfalls an den Steuerungsrechner 10 weitergeleitet. Wenn die Zwischenkreisspannung Uz den Maximalwert der Netzspannung Un nahezu erreicht hat, ist der Einschaltladevorgang beendet und die Ladewiderstände 17 werden durch Schließen von Schaltern 22 überbrückt, die dafür vom Steuerungsrechner 10 ein entsprechendes Steuersignal 23 erhalten.

In den Eingaberechner 4 werden die zum Schweißen des herzustellenden Produktes notwendigen Schweißdaten, wie Größe, Verlauf sowie Dauer des primären Schweißstroms Ip, und weitere für die Steuerung der Vielpunkt-Widerstandsschweißmaschine erforderliche Parameter sowie die Grenzwerte für den maximalen Netzstrom In und für die maximale und die minimale Zwischenkreisspannung Uz eingegeben. Der Eingaberechner 4 ist über eine Datenleitung 24 mit der Maschinensteuerung 5 verbunden, um die für die Steuerung der Vielpunkt-Widerstandsschweißmaschine notwendigen Eingabewerte an die Maschinensteuerung 5 weitergeben zu können. Die gewünschten Sollgrößen der Zwischenkreisspannung Uz werden vom Eingaberechner 4 über eine Datenleitung 25 an den Steuerungsrechner 10 für die Eingangsbrücke 6 übermittelt. Umgekehrt werden die gemessenen Istwerte der Zwischenkreisspannung Uz über die Datenleitung 25 an den Eingaberechner 4 rückgemeldet.

Damit die erfindungsgemäße Anordnung ihre Funktion als Netzstromreglung durchführen kann, muss nach Beendigung des Einschaltvorganges die Zwischenkreisspannung Uz über die Netzspannung Un hinaus weiter erhöht werden; bei einer in Europa üblichen Netzspannung Un von 400V AC wird beispielsweise die Zwischenkreisspannung Uz von ca. 560V DC auf 750V DC erhöht. Um diese Erhöhung zu erreichen, erhalten die Treiber 13 der IGBTs 12 der Eingangsbrücke 6 vom Steuerungsrechner 10 pulsbreitenmodulierte Steuersignale 26 mit einer Frequenz zwischen 2 kHz und 10 kHz, die bewirken, dass in bekannter Weise im Zusammenspiel mit Netzdrosseln 27 und den Zwischenkreiskondensatoren 7 die Zwischenkreisspannung Uz angehoben wird. Bei Erreichen der vorgegebenen maximalen Zwischenkreisspannung Uz wird vom Steuerungsrechner 10 für die Eingangsbrücke 6 ein Freigabesignal an den Steuerungsrechner 11 für den Wechselrichter 8 über eine Datenleitung 28 gegeben. Vor der Freigabe der Schweißung werden die notwendigen Schweißdaten mittels einer Datenleitung 29 vom Eingaberechner 4 auch an den Steuerungsrechner 11 für den Wechselrichter 8 weitergeleitet. Über die Datenleitungen 25 und 29 erhält der Eingaberechner 4 ausserdem Rückmeldungen von den Steuerungsrechnern 10 und 11 über die aktuellen Messwerte des Schweißstromes Ip, des Netzstromes In und der Zwischenkreisspannung Uz, sowie Meldungen über eventuell beim Schweißen auftretende Fehler, wie z.B. Grenzwertüberschreitungen der gemessenen Werte, Übertemperaturen durch Kühlmittelausfall usw.). Fehlermeldungen, die einen Maschinenstopp erforderlich machen, werden über die Datenleitungen 34 und 39 von den Steuerungsrechnern 10 und 11 direkt an die Maschinensteuerung 5 übermittelt.

Der Wechselrichter 8 weist zwei Paare von Leistungstransistoren, vorzugsweise IGBTs 30, die paarweise von je einem Treiber 31 angesteuert werden, sowie je eine parallel zu den IGBTs 30 angeordnete Diode 32 und zumindest einen Zwischenkreisdämpfungskondensator 33 auf. Beim vorher beschriebenen Einschaltvorgang werden auch die Zwischenkreisdämpfungskondensatoren 33 mit aufgeladen.

Zum Auslösen der Schweißung wird über eine Datenleitung 34 ein Schweißauslösesignal von der Maschinensteuerung 5 an den Steuerungsrechner 11 für den Wechselrichter 8 übermittelt, der wiederum entsprechende Steuersignale 35 an die Treiber 31 der IGBTs 30 des Wechselrichters 8 weitergibt, wodurch nun durch die Primärwicklung des Wechselstrom-Schweißtransformators 9 ein primärer Schweißstrom Ip fließt. Bei der mit Wechselstrom erfolgenden Schweißung wird vorzugsweise ein sinusförmiger primärer Schweißstrom Ip mit einer Frequenz von 40 - 200 Hz gewählt. Die in Fig. 1b schematisch angedeutete Vielpunkt-Widerstandsschweißmaschine für Gleichstromschweißung arbeitet mit einer Mittelfrequenztechnik mit einem rechteckförmigem primärem Schweißstrom Ip mit einer Frequenz von ca. 1000 Hz. Die sekundärseitig angeordneten Hochstromdioden 36 richten hierbei die vom Schweißtransformator 9' gelieferte Spannung gleich. Im Rahmen der Erfindung können mehrere Schweißgruppen, d.h. mehrere Wechselrichter 8 und Schweißtransformatoren 9 bzw. 9', an den aus einer Eingangsbrücke 6 samt Steuerungsrechner 10 und aus den Zwischenkreiskondensatoren 7 bestehenden Zwischenkreis angeschlossen werden, wie dies vor allem bei Vielpunkt-Widerstandsschweißmaschinen zum Herstellen von Gitterrosten oder Drahtgittermatten üblich ist.

Die Größe des primären Schweißstroms Ip wird mit einem Stromsensor 37 gemessen und der Messwert über die Datenleitung 38 dem Steuerungsrechner 11 für den Wechselrichter 8 zugeführt. Im Steuerungsrechner 11 sorgt eine Stromregelung dafür, dass die vorgewählte Größe des primären Schweißstromes Ip eingehalten wird. Dies ist deshalb wichtig, da der Schweißtransformator 9; 9' die zum Schweißen notwendige Energie im Wesentlichen aus den Zwischenkreiskondensatoren 7 entnimmt, wodurch die Zwischenkreisspannung Uz absinkt. Ohne diese Stromregelung würde der primäre Schweißstrom Ip wegen der absinkenden Zwischenkreisspannung Uz während des Schweißvorgangs ebenfalls absinken. Um die nötige Energie bereit stellen zu können, ist die Kapazität der Zwischenkreiskondensatoren 7 von der geforderten Leistung der Vielpunkt-Widerstandsschweißmaschine 1 abhängig. Die Kapazität der Zwischenkreiskondensatoren 7 ist gegenüber einer üblichen Auslegung wesentlich größer, wobei die übliche Auslegung durch die technischen Daten der IGBTs, insbesondere durch den Nennstrom bestimmt wird.

Der Steuerungsrechner 11 für den Wechselrichter 8 bekommt über die Datenleitung 38 die Werte über die Größe und Dauer des mit dem Stromsensor 37 gemessenen primären Schweißstromes Ip und gibt diese über die Datenleitung 28 an den Steuerungsrechner 10 für die Eingangsbrücke 6 weiter. Der Steuerungsrechner 10 für die Eingangsbrücke 6 ermittelt mit Hilfe der Zwischenkreisspannungs-Messeinrichtung 20 um welchen Wert die Zwischenkreisspannung Uz während der Schweißung abgesunken ist und errechnet nun aus der von der Maschinensteuerung 5 vorgegebenen und über eine Datenleitung 39 übermittelten Taktzahl der Vielpunkt-Widerstandsschweißmaschine 1, mit welchem Netzstrom in die Vielpunkt-Widerstandsschweißmaschine 1 zu versorgen ist, damit vor Beginn des nächsten Schweißtakts die Zwischenkreiskondensatoren 7 wieder voll aufgeladen sind. Eine Erhöhung der Taktzahl der Widerstandsschweißmaschine bewirkt beispielsweise automatisch eine Erhöhung des Netzstromes In. Über die Datenleitung 39 erfolgt ausserdem eine Rückmeldung vom Steuerungsrechner 10 für die Eingangsbrücke 6 an die Maschinensteuerung 5, wenn die Zwischenkreisspannung Uz ihren Sollwert erreicht hat und damit ein neuer Schweißtakt erfolgen kann. Der Netzstrom In wird mit Hilfe eines Netzstromsensors 40 gemessen und der Wert des Netzstromes In über eine Datenleitung 41 dem Steuerungsrechner 10 für die Eingangsbrücke 6 übermittelt. Der Steuerungsrechner 10 sendet nun aufgrund der gemessenen Werte des Netzstromes In entsprechende Steuersignale 26 an die Treiber 13 der Eingangsbrücke 6, wodurch die IGBTs 12 den vom Wechselrichter 8 benötigten Zwischenkreisstrom Iz in einem pulsbreitenmoduliertem Zeitablauf mit einer zwischen 2 kHz und 10 kHz liegenden Taktfrequenz schalten, so dass der Netzstrom In unabhängig von der Größe und vom Verlauf des Schweißstromes den vorgegebenen Maximalwert nicht überschreitet, immer phasengleich mit der Netzspannung Un fließt und einen sinusförmigen Kurvenverlauf annimmt.

Über die Datenleitung 34 werden ausserdem die gemessenen Werte des primären Schweißstromes Ip sowie etwaige beim Schweißen auftretende Störungen oder Unregelmäßigkeiten an die Maschinensteuerung 5 weitergeleitet, um die nachfolgenden Schweißtakte entsprechend steuern zu können.

Die Fig. 2 zeigt den zeitlichen Verlauf des Netzstroms In, der Zwischenkreisspannung Uz und des primären Schweißstromes Ip, wobei der zeitliche Verlauf und die Größe des primären Schweißstromes Ip durch die Schweißparameter für das herzustellende Produkt vorgegeben sind. Wie Fig. 2 zeigt, sinkt die Zwischenkreisspannung Uz während des Schweißens ab, während der Stromregler im Steuerungsrechner 11 für den Wechselrichter 8 dafür sorgt, dass der primäre Schweißstrom Ip immer auf einem konstanten Wert gehalten wird. Bei einer in Europa üblichen Netzspannung Un von 400V AC sinkt die Zwischenkreisspannung Uz beispielsweise von ca. 750V DC auf ca. 600V DC ab.
Die Zwischenkreiskondensatoren 7 werden in den Schweißpausen mit nahezu gleichbleibendem sinusförmigen Strom In aus dem Drehstromnetz nachgeladen bis die Zwischenkreisspannung Uz nahezu ihren Maximalwert erreicht hat. Um bei Überschreiten dieses Maximalwertes der Zwischenkreisspannung Uz ein Absinken des Netzstromes In auf Null zu verhindern, setzt der nachfolgende Schweißtakt bereits vor Erreichen dieses Maximalwertes ein. Der Netzstrom In fließt auch während des Schweißtaktes in gleichbleibender Größe weiter ohne abzusinken, da die erforderliche Schweißenergie überwiegend aus den Zwischenkreiskondensatoren 7 und nur zum Teil dem Netzstrom In entnommen wird. Der Netzstrom In fließt daher während der Schweißtakte und in den Pausen zwischen den Schweißtakten immer mit nahezu gleicher, optimaler Stromstärke. Der optimale Netzstrom In ist dann gegeben, wenn dieser über die Produktionszeit der Vielpunkt-Widerstandsschweißmaschine 1 eine nahezu gleichmäßige Größe auf möglichst niedrigem, konstant bleibendem Niveau aufweist. Den optimalen Wert des Netzstroms In ermittelt der Steuerungsrechner 10 aufgrund der ihm vom Eingaberechner 4 über die Datenleitung 25 zur Verfügung gestellten Schweißdaten, wie Maschinentaktzahl, Schweißstrom und Schweißzeit, die vom herzustellenden Produkt und den Produktionsbedingungen der Vielpunkt-Widerstandsschweißmaschine 1 abhängig sind. Ausserdem ist es im Rahmen der Erfindung, vor allem als Korrekturgröße möglich, aus den gemessenen Istwerten des Schweißstromes Ip und den gemessenen Minimal- bzw. Maximalwerten der Zwischenkreisspannung Uz, dh aus dem Wirkungsgrad der Vielpunkt-Widerstandsschweißmaschine 1 den optimalen Wert des Netzstromes In zu ermitteln. Die Netzdrosseln 27 wirken bei der Entnahme der Schweißenergie aus dem Netzstrom In wie ein zusätzlicher Energiespeicher.

## Patentansprüche

1. Verfahren zum Erzeugen eines periodisch wechselnden Schweißstromes (Ip) hoher Leistungsdichte mit beliebiger Kurvenform für eine mit einphasigem Wechsel- oder Gleichstrom taktweise betriebene Vielpunkt-Widerstandsschweißmaschine, wobei der Schweißstrom mit Hilfe einer steuerbaren, pulsbreitenmodulierten Wechselrichterschaltung (8) aus einer dreiphasigen Netzspannungsquelle (L1, L2, L3) erzeugt wird, **dadurch gekennzeichnet, dass** der Schweißstrom (Ip) zum überwiegenden Teil aus einem zwischen der Netzspannungsquelle (L1, L2, L3) dem Verbraucher (1) angeordneten, aufladbaren Energiespeicher (7) und nur zum geringen Teil aus der Netzspannungsquelle (L1, L2, L3) entnommen wird, dass der Energiespeicher (7) während der Schweißpausen aus der Netzspannungsquelle (L1, L2, L3) mit einem konstanten Netzstrom (In) auf einen wählbaren, maximalen Spannungswert (Uz) aufgeladen wird, der größer als der Maximalwert der Netzspannung (Un) ist, dass der Netzstrom (In) auch beim Schweißen unabhängig von der Größe und vom Verlauf des Schweißstromes (Ip) auf einem konstanten Wert eingeregelt wird, wobei der Netzstrom (In) eine sinusförmige Kurvenform erhält und phasengleich mit der Netzspannung (Un) ist, und dass der Schweißstrom (Ip) mit Hilfe einer Stromregelung (11) für die Wechselrichterschaltung (8) auf einem vorgewählten Wert eingeregelt wird.

2. Verfahren nach Anspruch 1, **dadurch gekennzeichnet, dass** als Energiespeicher zumindest ein Zwischenkreiskondensator (7) mit großer Ladekapazität verwendet wird.

3. Verfahren nach Anspruch 2, **dadurch gekennzeichnet, dass** die Schweißung kurz vor Erreichen des Maximalwertes der Spannung (Uz) ausgelöst wird.

4. Verfahren nach einem der Ansprüche 1 bis 3, **dadurch gekennzeichnet, dass** die Zwischenkreisspannung (Uz), der Netzstrom (In) und der Schweißstrom (Ip) gemessen werden

5. Anordnung zum Durchführen des Verfahrens nach einem der Ansprüche 1 bis 4, mit zumindest einem Zwischenkreiskondensator, einem ansteuerbaren Wechselrichter, einem Schweißtransformator, einem Steuerungsrechner, einem Eingaberechner und einer Maschinensteuerung, **dadurch gekennzeichnet, dass** zum Aufladen der Zwischenkreiskondensatoren (7) je Netzphase (L1; L2; L3) eine Netzdrossel (27) sowie eine mit Hilfe eines von dem Eingaberechner (4) und der Maschinensteuerung (5) ansteuerbaren Steuerungsrechners (10) ansteuerbare Eingangsbrücke (6) vorgesehen ist, die je Netzphase (L1; L2; L3) mehrere paarweise geschaltete Leistungstransistoren (12) samt parallel geschalteter Dioden (14), einen Treiber (13) sowie zumindest einen Dämpfungskondensator (15) aufweist, dass der primäre Schweißstrom (Ip) mit einer Strommesseinrichtung (37) meßbar ist, deren Messwerte (Ip) zumindest an den Steuerungsrechner (10) der Eingangsbrücke (6) und an einen Steuerungsrechner (11) für den Wechselrichter (8) übermittelt werden, dass der Netzstrom (In) mit einer Strommesseinrichtung (40) und die Zwischenkreisspannung (Uz) mit einer Spannungsmesseinrichtung (20) meßbar ist, wobei die Messwerte (In, Uz) zumindest an den Eingangsrechner (10) der Eingangsbrücke (6) übermittelt werden, dass der Steuerungsrechner (10) der Eingangsbrücke (6) aufgrund der Messwerte (Uz, In, Ip) entsprechende Steuersignale (26) an die Treiber (13) der Eingangsbrücke (6) sendet, wodurch die Leistungstransistoren (12) der Eingangsbrücke (6) einen vom Wechselrichter (8) für die Bereitstellung des Schweißstromes (Ip) benötigten Zwischenkreisstrom (Iz) in einem pulsbreitenmoduliertem Zeitablauf schalten und der Netzstrom (In) auch während des Schweißtaktes unabhängig von der Größe und vom Verlauf des Schweißstromes (Ip) auf einem konstanten Wert eingeregelt wird, und dass der Steuerungsrechner (11) des Wechselrichters (8) eine Schaltung zum Konstanthalten des primären Schweißstromes (Ip) aufweist.

6. Anordnung nach Anspruch 5, **dadurch gekennzeichnet, dass** der Wechselrichter (8) mehrere paarweise geschaltete Leistungstransistoren (30) samt parallel geschalteter Dioden (32), je Paar Leistungstransistoren (30) einen Treiber (32) sowie zumindest einen Dämpfungskondensator (33) aufweist.

7. Anordnung nach einem der Ansprüche 5 bis 6, **dadurch gekennzeichnet, dass** die Netzdrossel (27) als zusätzlicher Energiespeicher für den Schweißstrom (Ip) dient.

8. Anordnung nach einem der Ansprüche 5 bis 7, **dadurch gekennzeichnet, dass** beim Einschalten der Anlage der Netzstrom (In) je Netzphase über einen mit Hilfe eines Schalters (22) überbrückbaren Ladewiderstand (17) fließt.

9. Anordnung nach einem der Ansprüche 5 bis 8, **dadurch gekennzeichnet, dass** die Leistungstransistoren (12, 30) IGBTs sind.

10. Vielpunkt-Widerstandsschweißmaschine zum Herstellen von aus einander senkrecht kreuzenden Längs- und Querelementen bestehenden Gitterrosten oder Gittermatten mit einer Anordnung nach einem der Ansprüche 5 bis 9, **dadurch gekennzeichnet, dass** an den aus einer Eingangsbrücke (6) mit zugehörigem Steuerungsrechner (10) und zumindest einen Zwischenkreiskondensator (7) bestehenden Zwischenkreis zumindest ein aus einem ansteuerbaren Wechselrichter (8) und einem Schweißtransformator (9; 9') bestehender Schweißstromkreis anschließbar ist.

11. Vielpunkt-Widerstandsschweißmaschine nach Anspruch 10, **dadurch gekennzeichnet, dass** die Schweißung mit Wechselstrom erfolgt, wobei ein vorzugsweise sinusförmiger, primärer Schweißstrom (Ip) mit einer Frequenz von 40 - 200 Hz verwendet wird.

12. Vielpunkt-Widerstandsschweißmaschine nach Anspruch 10, **dadurch gekennzeichnet, dass** die Schweißung mit Gleichstrom erfolgt, wobei eine Mittelfrequenztechnik mit einem rechteckförmigen primären Schweißstrom (Ip) mit einer Frequenz von 1000 Hz verwendet wird, und sekundärseitig angeordnete Hochstromdioden (36) hierbei die vom einem Schweißtransformator (9') gelieferte Spannung gleichrichten.

## Claims

1. Method for generating a periodically alternating welding current (Ip) of high power density having any desired waveform for a multi-spot resistance welding machine which is operated intermittently by monophase alternating or direct current, the welding current being generated from a three-phase mains voltage source (L1, L2, L3) using a controllable, pulse-width-modulated inverter circuit (8), **characterised in that** the welding current (Ip) is predominantly drawn from a rechargeable energy store (7) which is arranged between the mains voltage source (L1, L2, L3) and the load (1) and only a small portion is drawn from the mains voltage source (L1, L2, L3), **in that** during welding pauses the energy store (7) is recharged to a selectable maximum voltage value (Uz) from the mains voltage source (L1, L2, L3) by means of a constant mains current (In), which maximum voltage value is greater than the maximum value of the mains voltage (Un), **in that** even during welding the mains current (In) is adjusted to a constant value, regardless of the size and course of the welding current (Ip), the mains current (In) having a sinusoidal waveform and being in phase with the mains voltage (Un), and **in that** the welding current (Ip) is adjusted to a preselected value using a current control means (11) for the inverter circuit (8).

2. Method according to claim 1, **characterised in that** at least one intermediate circuit capacitor (7) having a high loading capacity is used as an energy store.

3. Method according to claim 2, **characterised in that** the welding is initiated shortly before the maximum voltage value (Uz) is reached.

4. Method according to any one of claims 1 to 3, **characterised in that** the intermediate circuit voltage (Uz), the mains current (In) and the welding current (Ip) are measured.

5. Arrangement for carrying out the method according to any one of claims 1 to 4, comprising at least one intermediate circuit capacitor, a controllable inverter, a welding transformer, a control computer, an input computer and a machine control means, **characterised in that** a power choke (27) is provided for each mains phase (L1; L2; L3) for recharging the intermediate circuit capacitors (7), as well as an input bridge (6) which can be activated by the input computer (4) and the machine control means (5), which power choke comprises, for each mains phase (L1; L2; L3), a plurality of power transistors (12) connected in pairs and diodes (14) connected in parallel, a driver (13) and at least one attenuating capacitor (15), **in that** the primary welding current (Ip) can be measured using a current measuring device (37), the measured values (Ip) of which are transmitted at least to the control computer (10) of the input bridge (6) and to a control computer (11) for the inverter (8), **in that** the mains current (In) can be measured using a current measuring device (40) and the voltage (Uz) can be measured using a voltage measuring device (20), the measured values (In, Uz) being transmitted at least to the input computer (10) of the input bridge (6), **in that** based on the measured values (Uz, In, Ip) the control computer (10) of the input bridge (6) sends corresponding control signals (26) to the driver (13) of the input bridge (6), as a result of which the power transistors (12) of the input bridge (6) switch an intermediate circuit current (Iz) required by the inverter (8) for the provision of the welding current (Ip) in a pulse-width-modulated time lapse, and even during the welding cycle the mains current (In) is adjusted to a constant value, regardless of the size and course of the welding current (Ip), and **in that** the control computer (11) of the inverter (8) comprises a circuit for keeping the primary welding current (Ip) constant.

6. Arrangement according to claim 5, **characterised in that** the inverter (8) comprises a plurality of power transistors (30) connected in pairs and diodes (32) connected in parallel, a driver (32) for each pair of power transistors (30) and at least one attenuating capacitor (33).

7. Arrangement according to either claim 5 or claim 6, **characterised in that** the power choke (27) is used as an additional energy store for the welding current (Ip).

8. Arrangement according to any one of claims 5 to 7, **characterised in that**, when the system is switched on, the mains current (In) of each mains phase flows via a charging resistor (17) which can be bridged using a switch (22).

9. Arrangement according to any one of claims 5 to 8, **characterised in that** the power transistors (12, 30) are IGBTs.

10. Multi-spot resistance welding machine for producing gridirons or mesh mats consisting of longitudinal and transverse elements which intersect one another at right angles, comprising an arrangement according to any one of claims 5 to 9, **characterised in that** at least one welding current circuit consisting of a controllable inverter (8) and a welding transformer (9; 9') can be connected to the intermediate circuit consisting of an input bridge (6) having an associated control computer (10) and at least one intermediate circuit capacitor (7).

11. Multi-spot resistance welding machine according to claim 10, **characterised in that** the welding is carried out using alternating current, a preferably sinusoidal primary welding current (Ip) having a frequency of 40 - 200 Hz being used.

12. Multi-spot resistance welding machine according to claim 10, **characterised in that** the welding is carried out using direct current, medium frequency technology with a rectangular primary welding current (Ip) having a frequency of 1000 Hz being used, and high-current diodes (36) arranged on the secondary side rectifying the voltage supplied by a welding transformer (9').

## Revendications

1. Procédé pour générer un courant de soudage (Ip) alternant périodiquement avec une forte densité de puissance et une forme d'onde quelconque, pour une machine de soudage à résistance multipoints fonctionnant de manière cadencée avec un courant alternatif monophasé ou un courant continu, dans lequel le courant de soudage est généré à l'aide d'un circuit redresseur (8) susceptible d'être commandé et modulé en largeur d'impulsion, à partir d'une source de tension de secteur triphasé (L1, L2, L3), **caractérisé en ce que** le courant de soudage (Ip) est pris en majeure partie depuis un accumulateur d'énergie rechargeable (7) agencé entre la source de tension de secteur (L1, L2, L3) et le dispositif utilisateur (1) et uniquement en faible partie depuis la source de tension de secteur (L1, L2, L3), **en ce que** l'accumulateur d'énergie (7) est chargé pendant les pauses de soudage depuis la source de tension de secteur (L1, L2, L3) avec un courant de secteur constant (In) jusqu'à une valeur de tension maximum (Uz) susceptible d'être choisie, qui est supérieure à la valeur maximale de la tension de secteur (Un), **en ce que** le courant de secteur (In) est également régulé lors du soudage à une valeur constante indépendamment de l'intensité et de l'évolution du courant de soudage (Ip), et dans lequel le courant de secteur (In) contient une forme en courbe sinusoïdale et présente une phase identique à la tension du secteur (Un), et **en ce que** le courant de soudage (Ip) est régulé à une valeur présélectionnée à l'aide d'une régulation du courant (11) pour le circuit redresseur (8).

2. Procédé selon la revendication 1, **caractérisé en ce que** l'on utilise à titre d'accumulateur d'énergie au moins un condensateur de circuit intermédiaire (7) avec une forte capacité de charge.

3. Procédé selon la revendication 2, **caractérisé en ce que** le soudage est déclenché brièvement avant d'atteindre la valeur maximum de la tension (Uz).

4. Procédé selon l'une des revendications 1 à 3, **caractérisé en ce que** la tension de circuit intermédiaire (Uz), le courant de secteur (Un) et le courant de soudage (Ip) sont mesurés.

5. Agencement pour mettre en oeuvre le procédé selon l'une des revendications 1 à 4, comprenant au moins un condensateur de circuit intermédiaire, un redresseur pilotable, un transformateur de soudage, un calculateur de commande, un calculateur d'entrée et une commande machine, **caractérisé en ce que**, pour charger les condensateurs de circuit intermédiaire (7) on prévoit pour chaque phase du secteur (L1 ; L2 ; L3) un réducteur de secteur (27) ainsi qu'un pont d'entrée (6) pilotable à l'aide d'un calculateur de commande (10) piloté par le calculateur d'entrée (4) et par la commande machine (5), le pont comprenant pour chaque phase du secteur (L1 ; L2 ; L3) plusieurs transistors de puissance branchés par paires y compris des diodes (14) branchées en parallèle, un circuit pilote (13) ainsi qu'au moins un condensateur d'amortissement (15), **en ce que** le courant de soudage primaire (Ip) est mesurable avec un système de mesure de courant (37), dont les valeurs de mesure (Ip) sont transmises au moins au calculateur de commande (10) du pont d'entrée (6) et à un calculateur de commande (11) pour le redresseur (8), **en ce que** le courant de secteur (In) est mesurable avec un système de mesure de courant (40) et la tension de circuit intermédiaire (Uz) est mesurable avec un système de mesure de tension (20), tel que les valeurs de mesure (In, Uz) sont transmises au moins au calculateur d'entrée (10) du pont d'entrée (6), **en ce que** le calculateur de commande (10) du pont d'entrée (6) envoie au circuit pilote (13) du pont d'entrée (6) des signaux de commande (26) correspondants basé sur les valeurs de mesure (Uz, In, Ip), grâce à quoi les transistors de puissance (12) du pont d'entrée (6) injectent un courant de circuit intermédiaire (Iz), nécessaire pour le redresseur (8) pour la préparation du courant de soudage (Ip), selon un déroulement temporel modulé en largeur d'impulsion, et le courant de secteur (In) est régulé à une valeur constante également pendant la cadence de soudage indépendamment de l'intensité et de l'évolution du courant de soudage (Ip), et **en ce que** le calculateur de commande (11) du redresseur (8) comprend un circuit pour maintenir le courant de soudage primaire (Ip) constant.

6. Agencement selon la revendication 5, **caractérisé en ce que** le redresseur (8) comprend plusieurs transistors de puissance (30) branchés par paires, y compris les diodes (32) branchées en parallèle, un circuit pilote (32) pour chaque paire de transistors de puissance (30), et au moins un condensateur d'amortissement (33).

7. Agencement selon l'une des revendications 5 à 6, **caractérisé en ce que** le réducteur de secteur (27) sert à titre d'accumulateur d'énergie additionnel pour le courant de soudage (Ip).

8. Agencement selon l'une des revendications 5 à 7, **caractérisé en ce que**, lors de la mise en service de l'installation, le courant de secteur (In) s'écoule, pour chaque phase du secteur, via une résistance de chargement (17) susceptible d'être mise en court-circuit à l'aide d'un commutateur (22).

9. Agencement selon l'une des revendications 5 à 8, **caractérisé en ce que** les transistors de puissance (12, 30) sont des IGBT.

10. Machine de soudage à résistance multipoints pour fabriquer des caillebotis ou des plaques grillagées constituées d'éléments longitudinaux et d'éléments transversaux qui se croisent mutuellement perpendiculairement, avec un agencement selon l'une des revendications 5 à 9, **caractérisée en ce qu'**au moins un circuit de courant de soudage, constitué d'un redresseur pilotable (8) et d'un transformateur de soudage (9 ; 9'), est susceptible d'être branché au circuit intermédiaire constitué d'un pont d'entrée (6) avec calculateur de commande associé (10) et d'au moins un condensateur de circuit intermédiaire (7).

11. Machine de soudage à résistance multipoints selon la revendication 10, **caractérisée en ce que** le soudage a lieu avec un courant alternatif, et l'on utilise de préférence un courant de soudage primaire (Ip) de forme sinusoïdale avec une fréquence de 40 à 200 Hz.

12. Machine de soudage à résistance multipoints selon la revendication 10, **caractérisée en ce que** le soudage a lieu avec un courant continu, et on utilise une technique à fréquence moyenne avec un courant de soudage primaire (Ip) de forme rectangulaire avec une fréquence de 1000 Hz, et des diodes de puissance (36) agencées du côté secondaire redressent ici la tension fournie par un transformateur de soudage (9').
